# EUROPEAN PATENT SPECIFICATION

(11) **EP 1 377 107 B1**
(45) Date of publication and mention of the grant of the patent: **11.01.2012**
(21) Application number: 03014158.4
(22) Date of filing: 24.06.2003
(51) Int. Cl.: H04Q 11/00

(54) **Ethernet passive optical network system**
Passives optisches Ethernetnetzwerksystem
Système de réseau ethernet optique passif

(30) Priority: 24.06.2002 KR 2002035470
(43) Date of publication of application: 02.01.2004
(73) Proprietor: SAMSUNG ELECTRONICS CO., LTD., Kyungki-do (KR)
(72) Inventor: Song, Jae-Yeon, Suwon-city, Kyungki-do (KR); Kim, Jin-Hee, Suwon-city, Kyungki-do (KR); Kim, A-Jung, Suwon-city, Kyungki-do (KR); Lee, Min-Hyo, Suwon-city, Kyungki-do (KR); Lim, Se-Youn, Suwon-city, Kyungki-do (KR); Kim, Su-Hyung, Suwon-city, Kyungki-do (KR)
(74) Representative: Grünecker, Kinkeldey, Stockmair & Schwanhäusser

(56) References cited:
- EP-A- 1 466 444
- HIROSHI SUZUKI ET AL: "EPON-P2P Emulation and Downstream Broadcast" IEEE802.3 EFM TASK FORCE BASELINE PROPOSAL, March 2002 (2002-03), XP002243634
- AJAY GUMMALLA: "EPON Compliance Architecture" IEEE802.3AH ETHERNET IN THE FIRST MILE TASK FORCE PRESENTATION, January 2002 (2002-01), XP002238653

## Description

The present invention relates to a Passive Optical Network (PON) system, and more particularly to an Ethernet PON (EPON) system. The present invention further relates to an EPON system operation method.

In general, a PON system has a configuration where a single Optical Line Termination (OLT) is connected to a plurality of ONUs (Optical Network Units) over Optical Distribution Networks (ODN). In this configuration, all nodes are distributed in the form of a tree structure.

An exemplary well known PON system is in the form of Asynchronous Transfer Mode (ATM) - PON. Currently, point-to-point gigabit Ethernet technology and Media Access Control (MAC) technology of the ATM-PON have been standardized which are described in an IEEE 802.3z and an ITU-T (International Telecommunication Union-T) G983.1. One example of the MAC technology of the ATM-PON is described in United States Patent No. 5,978,374 issued on 2 November 1999, entitled "PROTOCOL FOR DATA COMMUNICATION OVER A POINT-TO-MULTIPOINT PASSIVE OPTICAL NETWORK", by Gigad Ghaib et al..

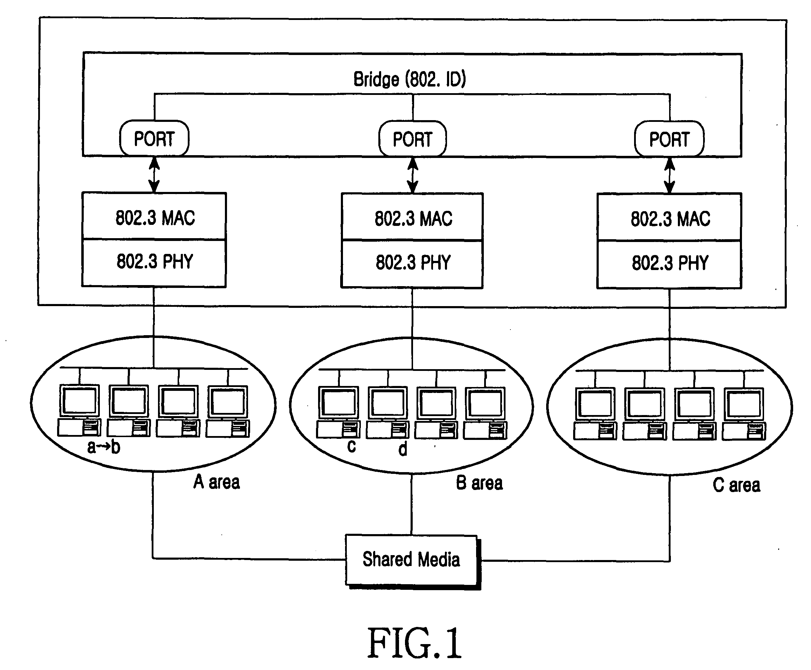

Fig. 1 is a view illustrating a relationship between the IEEE 802.3 Ethernet and the IEEE 802.1D bridge.

The development of the IEEE 802.1D standard is based on a shared media in which an Ethernet media allows one physical transmission media to be shared with a plurality of communication stations, such that an Ethernet frame received from a user terminal from various areas and connected to a bridge is transmitted to all user terminals in other areas connected to the bridge, as shown in Fig. 1. As bridge receives all Ethernet frames according to their individual characteristics of the shared media, the bridge receiving a frame at the individual ports stores the destination addresses and the source addresses in an address table. As a result, it is possible for the bridge to learn addresses of every port. The bridge receiving a frame after learning the addresses of every port transmits the received frame to only a port to which a destination address is assigned, but does not transmit the frame to other ports other than the port with the destination address, thereby reducing the number of data collisions, which is undesirable in the shared media.

Meanwhile the bridge is configured to receive a frame under the following three conditions.
(1) The first condition is provided on the assumption that the bridge does not search for the destination address of a received frame from a plurality of addresses stored in the address table. Instead, if there is no source address in the address table, or the bridge does not receive a frame associated with the source address (i.e., if the bridge receives an unpracticed address) the bridge transmits the frame to all ports other than the port receiving the unpracticed address as it cannot determine which one of ports will be used for frame transmission.
(2) The second condition is provided on the assumption that the port assigned to an address contained in the address table is the same as the port receiving a frame even though the address is found in the table. As such, a received frame can be discarded under the second condition. For example, referring to Fig. 1, in the case where a user terminal "a" of an area "A" transmits an Ethernet frame to another user terminal "b" contained in the same area "A", the Ethernet frame is also transmitted to the bridge as sell. However, because the port to which a destination address of the Ethernet frame is assigned is the same as a port to which the Ethernet frame is received, the bridge discards the Ethernet frame without transmitting it. The second condition is intended to reduce the unnecessary amount of traffic because the frame has already been transmitted to a destination address.
(3) The third condition is provided on the assumption that a destination address is found in the address table, but is not assigned to a port receiving a frame. In this case, the bridge transmits the frame to the port assigned to the destination address in the address table.

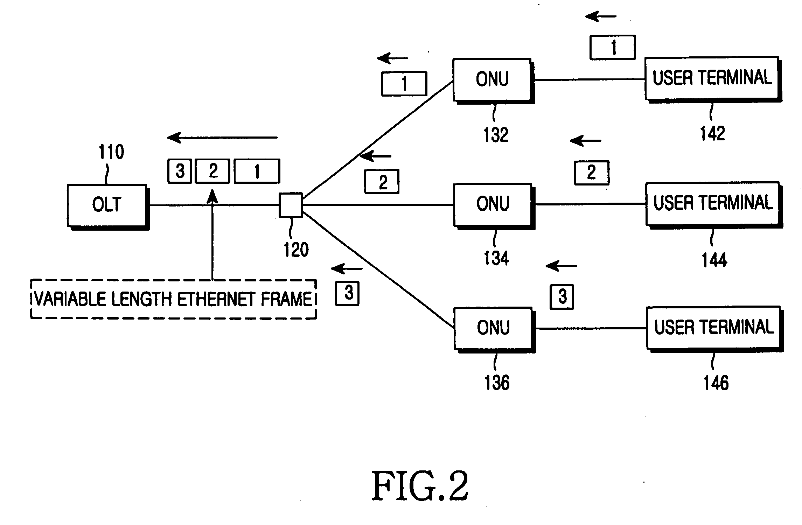

Fig. 2 is a block diagram illustrating a conventional PON system. As shown, the PON system includes an Optical Line Termination (OLT) 110, a plurality of Optical Network Units (ONUs) 132, 134 and 136, and an Optical Distribution Network (ODN) 120.

The OLT 110 is located on a tree structure route and plays an important role in providing each subscriber (i.e., each user) an access to the network with information.

The ODN 120 distributes downstream data frames received from the OLT 110 into ONUs 132, 134 and 136. The ONUs 132, 134 and 136 receive downstream data frames, and transmit them to the user terminals 142, 144 and 146. At the same time, the ODN multiplexes upstream data frames received from the ONUs 132, 134 and 136, which receive the upstream data frames received from the user terminals 142, 144 and 146 to the OLT 110 over the ODN 120. Note that the user terminals 142, 144 and 146 represent a variety of network termination units available in the PON system.

As shown in Fig. 2, the Ethernet frames transmitted from the first user terminal 142 to the second user terminal 144 are transmitted only to the OLT 110, but is not transmitted to the second user terminal 144. In addition, the bridge connected to the OLT 110 does not transmit the Ethernet frames to the second user terminal 144 in downstream transmission, resulting in the loss of Ethernet frames. That is, due to the underlying conditions, as described earlier, the PON system implemented in a conventional bridge network results in frame loss.

The document: Hiroshi Suzuki et al., "EPON P2P Emulation and Downstream Broadcast", IEEE 802.3 EFM Task Force Baseline Proposal, March 2002, deals with EPON 802.1D bridging and with the support of single packet downstream broadcast. The document discloses a logical PHY ID consisting of a one-bit mode indicator and a 15-bit PHY ID field. This logical PHY ID is located in the preamble of a frame.

Therefore, there is a need to develop a new scheme for allowing the PON to be compatible with a conventional bridge shown in Fig. 1 in order to perform a Peer-to-Peer (P2P) transmission in a conventional point-to-multipoint PON system.

It is the object of the present invention to provide an Ethernet frame structure that performs an emulation function to allow an Ethernet PON structure to be compatible with a conventional 802.1D bridge. The present invention further provides an Ethernet PON system using the Ethernet frame structure, and a point-to-point emulation implementation method for use in the Ethernet PON system. The present invention further provides an Ethernet PON system operation method.

This object is solved by the subject matters of the independent claims.

Preferred embodiments are defined in the dependent claims.

In one embodiment, an Ethernet Passive Optical Network (EPON) system having an Optical Line Termination (OLT) and a plurality of Optical Network Units (ONUs) connected to the OLT for providing a Peer-to-Peer (P2P) transmission between ONU-side objects controlled by the OLT includes: a PON tagging Ethernet frame for the P2P transmission, including a Destination Address (DA) field, a SA Source Address (SA) field, a mode field indicating an emulation mode, and a PHYsical ID (PHY_ID) field indicating identifiers (IDs) of the ONU-side objects, and a data field. The OLT further includes: a multiplexing layer for transmitting a received PON tagging Ethernet frame to an upper layer over a logic port connected to a corresponding PHY_ID field; and a bridging function blayer for converting information of the PHY_ID field into PHYsical ID (PHY_ID) information corresponding to a destination ONU-side object by referring to the DA field when an emulation mode of a frame received through the logic port is the P2P transmission mode and for transmitting the converted PHY_ID information to a corresponding ONU through a logic port associated with the converted PHY_ID information.

The above features and other advantages of the present invention will be more clearly understood from the following detailed description taken in conjunction with the accompanying drawings, in which:
Fig. 1 is a view illustrating a relationship between the IEEE 802.3 Ethernet and the IEEE 802.1D bridge in accordance with a conventional art;
Fig. 2 is a block diagram of a conventional PON system;
Fig. 3 is a view illustrating a PON tagging Ethernet frame structure in accordance with a preferred embodiment of the present invention;
Fig. 4 is a view illustrating a PON tagging Ethernet MAC control frame structure for an Multi-Point Control Protocol (MPCP) in accordance with a preferred embodiment of the present invention;
Fig. 5 is a view illustrating a PON tagging Ethernet MAC control frame structure for pausing an Ethernet PON system in accordance with a preferred embodiment of the present invention;
Fig. 6 is a view illustrating an Ethernet PON system configuration in accordance with a preferred embodiment of the present invention;
Fig. 7 is a view illustrating a layer transmission structure for a PON tagging Ethernet frame in the OLT shown in Fig. 6 in accordance with a preferred embodiment of the present invention;
Fig. 8 is a view illustrating a layer transmission structure for a PON tagging Ethernet MAC control frame used for the MPCP in the OLT shown in Fig. 6 in accordance with a preferred embodiment of the present invention;
Fig. 9 is a view illustrating a layer transmission structure for a PON tagging Ethernet MAC control frame for tagging the Ethernet frame in the OLT shown in Fig. 6 in accordance with a preferred embodiment of the present invention; and
Figs. 10 and 11 illustrate an overall operation of a bridge function layer in accordance with a preferred embodiment of the present invention.

Now, preferred embodiments of the present invention will be described in detail with reference to the annexed drawings. In the drawings, the same or similar elements are denoted by the same reference numerals even though they are depicted in different drawings. For the purposes of clarity and simplicity, a detailed description of known functions and configurations incorporated herein will be omitted as it may make the subject matter of the present invention rather unclear.

According to the teachings of the present invention, T an extra field of "vLink" tag is added to the conventional Ethernet frame. The "vLink" tag includes a mode field of 1 bit and a PHY_ID field of 15 bits. The mode field is classified into a P2P mode field and a Single Copy Broadcasting (SCB) mode field depending on the type of emulation modes. If necessary, additional modes may be further defined. The P2P mode is adapted to perform a P2P transmission in the Ethernet PON system, and the SCB mode is adapted to transmit frames to other ONUs other than the ONU that is transmitting the frame. The PHY_ID field is adapted to represent individual ONUs, or is assigned to indicate user ports connected to the individual ONUs. The PHY_ID field is adapted to identify the individual objects contained in a PON system, which is controlled by an OLT. The Ethernet frame having the "vLink" tag field will herein be called a PON tagging Ethernet frame.

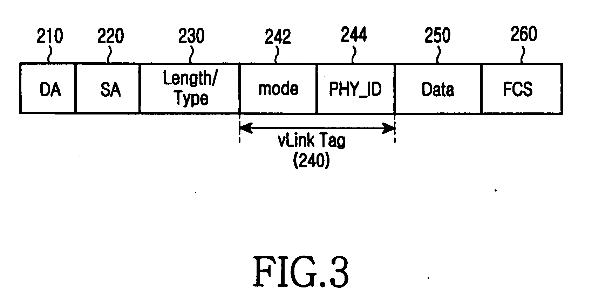

Fig. 3 is a view illustrating the PON tagging Ethernet frame structure in accordance with a preferred embodiment of the present invention. As shown, the PON tagging Ethernet frame includes a Destination Address (DA) field 210, a Source Address (SA) field 220, a length/type field 230, a mode field 242, a PHY_ID field 244, a data field 250, and a Frame Check Sequence (FCS) field 260. The PON tagging Ethernet frame inserts the mode field 242 and the PHY_ID field 244 between the length/type field 230 and the data field 250 compared to a conventional Ethernet frame structure. A payload data unit (PDU) for each user is connected successively to the rear of the PHY_ID field 244.

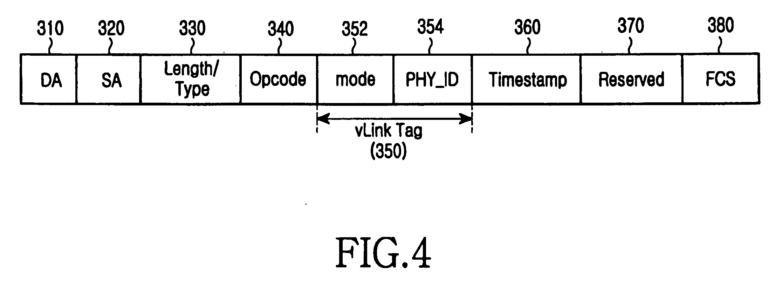

Fig. 4 is a view illustrating a PON tagging Ethernet Media Access Control (MAC) control frame structure for an MPCP in accordance with a preferred embodiment of the present invention. As shown, the PON tagging Ethernet MAC control frame includes a DA field 310, a SA field 320, a length/type field 330, an Operation (OP) code field 340, a mode field 352, a PHY_ID field 354, a timestamp field 360, a reserved field 370, and a FCS field 380. The PON tagging Ethernet MAC control frame for use in the MPCP inserts the mode field 352 and the PHY_ID field 354 between the OP code field 340 and the timestamp field 360 compared to a conventional Ethernet frame structure. The OP code field 340 is adapted to define a new OP code for performing the MPCP of the Ethernet PON system. The mode field 352, the PHY_ID field 354, and the timestamp field 360 correspond to OP code parameters. As the reserved field 370 is set differently according to the detailed functions of the MPCP message, it remains null generally.

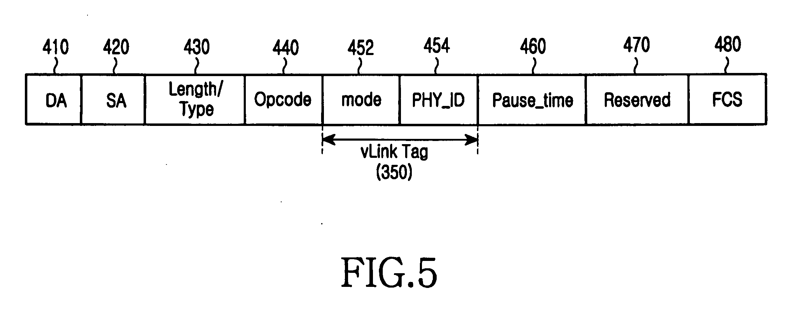

Fig. 5 is a view illustrating a PON tagging Ethernet MAC control frame structure for pausing an Ethernet PON system in accordance with a preferred embodiment of the present invention. As shown, the PON tagging Ethernet MAC control frame includes a DA field 410, a SA field 420, a length/type field 430, an OP code field 440, a mode field 452, a PHY_ID field 454, a Pause_time field 460, a reserved field 470, and a FCS field 480. The PON tagging Ethernet MAC control frame inserts the mode field 452 and the PHY_ID field 454 between the OP code field 440 and the Pause_time field 460 of a conventional Ethernet frame structure. The OP code field 440 is adapted to define a new OP code for pausing the Ethernet PON system. The mode field 452, the PHY_ID field 454, and the Pause_time field 460 correspond to OP code parameters.

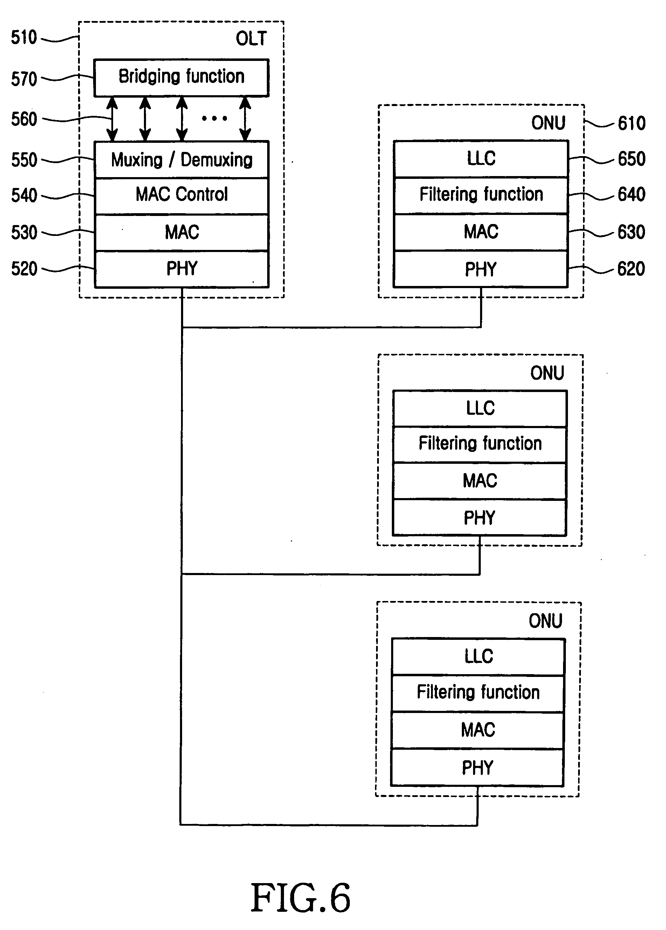

Fig. 6 is a view illustrating an Ethernet PON system configuration in accordance with a preferred embodiment of the present invention. The Ethernet PON system includes a single OLT 510 and a plurality of ONUs 610 connected to the OLT 510 in the form of a tree topology. The ONU 610 includes 802.3 PHY layer 620, 802.3 MAC layer 630, a filtering function layer 640, and a LLC layer 650. In this case, the ONU 610 adds the filtering layer 640 to a conventional ONU layer structure, and the function of the filter layer 640 will be described in detail hereinafter.

In the case of receiving a PON tagging Ethernet frame from the OLT 510, the filtering layer 640 checks the mode field. If the mode field indicates a SCB mode and a value of a PHY_ID field of the received frame is identical with a value of a PHY_ID field of the filtering layer 640, the received PON tagging Ethernet frame is discarded. However, if the value of the PHY_ID field of the checked frame is different from the value of the PHY_ID field of the filtering layer 640, the filtering layer 640 receives this PON tagging Ethernet frame. That is, if the PHY_ID value of the received frame is identical with the PHY_ID value of the filtering layer 640, this reception frame is considered to be a frame transmitted at the SCB mode by the filtering layer 640, such that the filtering layer 640 filters out this reception frame.

On the other hand, if the mode of a received frame is a P2P mode and a value of a PHY_ID field of the checked frame is identical with a value of a PHY_ID field of the filtering layer 640, the filtering layer 640 receives this PON tagging Ethernet frame. However, if the value of the PHY_ID field of the checked frame is different from the value of the PHY_ID field of the filtering layer 640, this PON tagging Ethernet frame is discarded. That is, in the case where the value of the PHY_ID field of the received frame is different from that of the filtering layer 640, it is determined that this received frame is not directed to the filtering layer 640, such that this frame is filtered.

The OLT 510 includes a 802.3 PHY layer 520, a 802.3 MAC layer 530, a 802.3 MAC control layer 540, a multiplexing layer 550, and a bridging function layer 570. In this case, the OLT 510 further includes the multiplexing layer 550 and the bridging function layer 570 compared to a conventional OLT layer structure, and the function of these layers will be described in detail hereinafter.

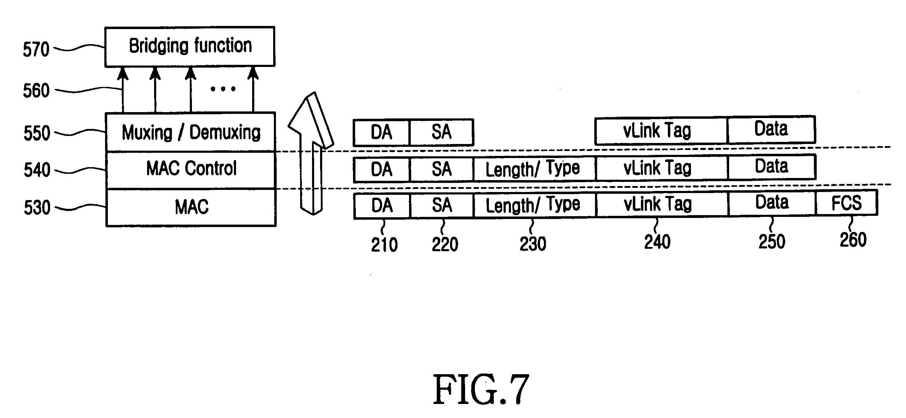

Figs. 7 to 9 illustrate encapsulation/decapsulation structures associated with the individual frame layers of the OLT 510, and they are denoted by the frame transmission direction from the ONU 610 to the OLT 510.

Fig. 7 is a view illustrating a layer transmission structure of a PON tagging Ethernet frame (shown in ofFig. 3) in the OLT 510 (shown in Fig. 6) in accordance with a preferred embodiment of the present invention. Referring to Fig. 7, the frame transmitted to the PHY layer 520 performs basic operations in the MAC layer 530, and then the DA field 210, the SA field 220, the length/type field 230, the vLink tag field 240, and the data field 250 are transmitted to an upper layer. Upon receiving the frame from the PHY layer 520, the MAC control layer 540 first checks the length/type field 230. In this case, the above frame is a user frame, such that the length/type field 230 indicates a frame length. If the frame is a user frame, the MAC control layer 540 performs no operation and transmits the DA field 210, the SA field 220, and the data field 250 to the upper layer. In this case, the vLink tag field 240 is considered to be a user data field, thus transmitted to the upper layer along with the fields 210, 220, and 250.

Thereafter, the multiplexing layer 550 checks the vLink tag field 240, and transmits the DA field 210, the SA field 220, the vLink tag field 240, and the data field 250 to the upper layer over a logic port 560 connected to a corresponding PHY_ID field. Upon receipt, the bridging function layer 570 combines MAC address information of the DA field 210 and the SA field 220 with the mode and PHY_ID information of the vLink tag field 240, and performs a reflection or forwarding operation according to the combined result. Note that the vLink tag field 240 has different PHY_ID values according to individual modes. If the mode is a P2P mode, a PHY_ID value indicating a destination address is allocated to the vLink tag field 240. If the mode is a SCB mode, a PHY_ID value of the ONU used for transmitting the frame to the OLT 510 is allocated to the vLink tag field 240. This PHY_ID allocation method is applicable in the same in downstream transmission.

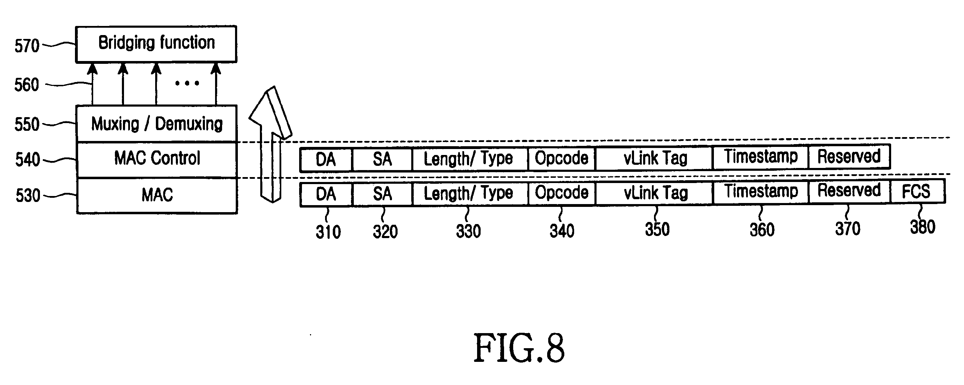

Fig. 8 is a view illustrating a layer transmission structure for a PON tagging Ethernet MAC control frame used for the MPCP in the OLT 510 shown in Fig. 6 in accordance with a preferred embodiment of the present invention. The Ethernet PON system implements an Ethernet PON's MPCP function using a MAC control frame. The MAC control layer 540 receives fields from the MAC layer 530 and then checks the length/type field 330. In this case, the length/type field 330 functions as a type field and the value of the type field indicates a MPCP definition value, so that the next fields are determined to be OP code parameters for the MPCP. The MAC control layer 540 of the OLT 510 checking the MPCP type may operate differently according to the individual ONUs 610 using the vLink tag field 350 and the timestamp field 360. The MAC control layer 540 also performs a ranging function, an automatic discovery function (also known as an auto discovery function), and a DBA function that are common in the MPCP operations. In this case, the PHY_ID value of the vLink tag field 350 is the same as a PHY_ID value assigned to an ONU for transmitting the frame to the OLT 510 in upstream transmission. In the case of downstream transmission, the PHY_ID value of the vLink tag field 350 is the same as a PHY_ID value of a destination ONU receiving the above frame.

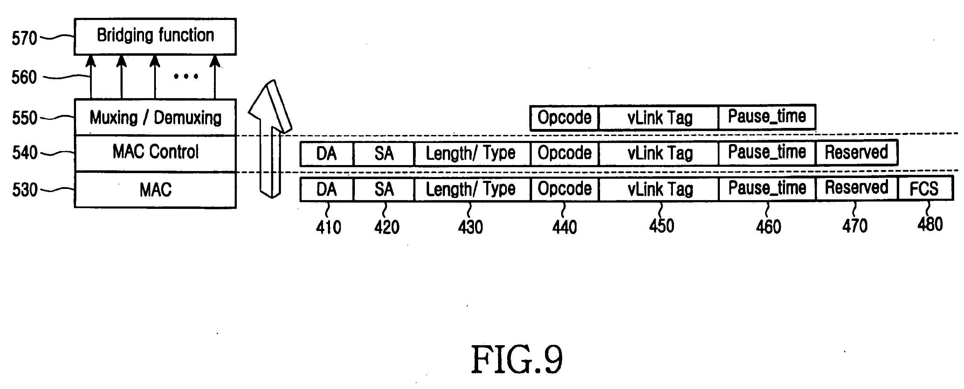

Fig. 9 is a view illustrating a layer transmission structure for a PON tagging Ethernet MAC control frame for pausing the Ethernet PON system in the OLT 510 shown in Fig. 6 in accordance with a preferred embodiment of the present invention. According to the conventional Ethernet MAC control frame for pausing the Ethernet PON system, it is impossible for the OLT 510 to pause the Ethernet PON system according to the individual ONUs 610 or individual subjects of the vLink tag. Therefore, the present invention can overcome this problem by adapting the vLink tag field 450 as an OP code parameter.

In operation, the MAC control layer 540 transmits a DA field 410, an OP code field 440, a vLink tag field 450, a Pause_time field 460 to an upper layer. The multiplexing layer 550 receiving them confirms the Ethernet PON pause state by referring to the OP code, checks information of the vLink tag field 450 and the Pause_time field 460, and then transmits the checked information to the bridging function layer 570 over a logic port 560. The bridging function layer 570 disables the logic port 560 of a corresponding vLink tag during a predetermined pause time, thereby implementing the Ethernet PON pause function. In the case of upstream transmission in such Ethernet PON pause state, the PHY_ID value of the ONU transmitting the above frame is the same as a PHY_ID value of the vLink tag field 450. In the case of downstream transmission, the PHY_ID value of the OLT 510 is defined as a default ID value and is then assigned. However, a DBA activated in the OLT 510 performs the same function as an Ethernet PON pause function, such that the PON tagging Ethernet MAC control frame for pausing the upstream Ethernet PON system may be ineffective.

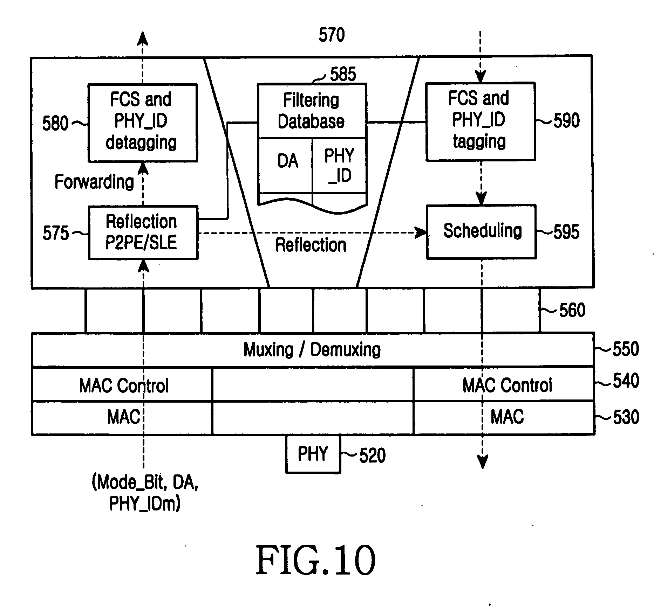

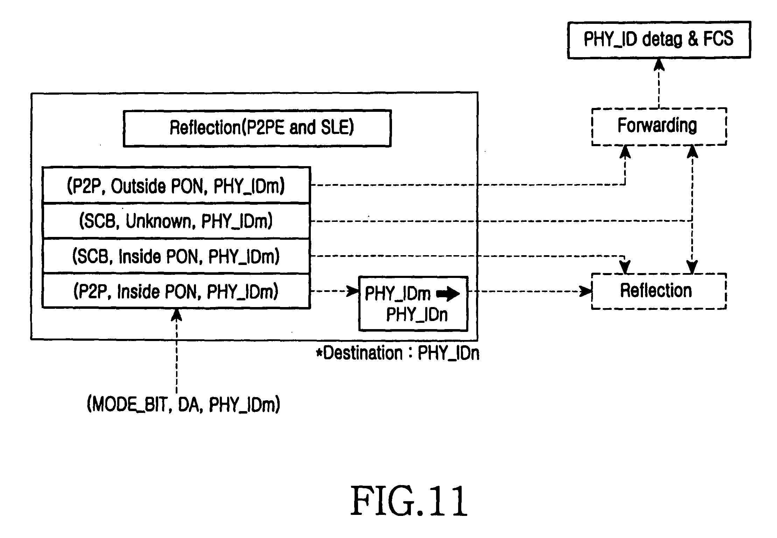

Figs. 10 and 11 illustrate an overall operation of a layer having a bridge function layer in accordance with a preferred embodiment of the present invention. The bridging function layer 570 processes information received from MAC control layer 540 differently according to the type of frames, such as a general frame or a control frame. If the information received from the MAC control layer 540 indicates the general frame (i.e., a general data frame), information of the PHY_ID and DA fields of the vLink tag field is checked first to determine either (1) whether a destination address exists in a corresponding PON system, or (2) whether the OLT 510 recognizes the destination.

If it is determined that the destination exists in the inside of the PON system, the OLT 510 checks a mode field. If it is determined that a mode is a SCB mode, the frame is transmitted to the logic port 560 associated with a corresponding PHY_ID information. If it is determined that a mode is a P2P mode, the OLT 510 converts information of the PHY_ID field into PHY_ID information associated with the destination ONU by referring to the DA fields, and then transmits the converted information to the reflection field 575. The frame transmitted to a corresponding logic port 560 after passing a plurality of fields from the reflection field 575 to the scheduler field 595 is transmitted in downstream transmission.

If the OLT 510 recognizes the destination, the information received from the MAC control layer 540 is reflected at a reflection field 575 and then transmitted to a scheduler 595. If the destination exists in the outside of the PON system or does not exist in a filtering database (DB) 585 of the OLT 510, the received information is broadcast and then forwarded to a desired destination.

Having thus described a preferred embodiment of a system for transmission communications in the Ethernet Passive Optical Network (EPON) system, it should be apparent to those skilled in the art that certain advantages of the system have been achieved. As apparent from the above description, the Ethernet PON system according to the present invention uses a PON tagging Ethernet frame having the vLink tag field and includes a multiplexing layer and a bridging function layer that are adapted to process this PON tagging Ethernet frame to an OLT, such that the Ethernet PON media can be connected to a bridge without changing a conventional 802.1D bridge.

While the preferred embodiments of the present invention have been illustrated and described, it will be understood by those skilled in the art that various changes and modifications may be made, and equivalents may be substituted for elements thereof without departing from the true scope of the present invention. In addition, many modifications may be made to adapt to a particular situation and the teaching of the present invention without departing from the central scope. Therefore, it is intended that the present invention not be limited to the particular embodiment disclosed as the best mode contemplated for carrying out the present invention, but that the present invention include all embodiments falling within the scope of the appended claims.

## Claims

1. An ethernet passive optical network system having an optical line termination and a plurality of optical network units connected to the optical line termination for providing peer-to-peer transmission between optical network unit-side objects controlled by the optical line termination, comprising:
a passive optical network tagging ethernet frame including a destination address,
a source address field, a mode field indicating an emulation mode, and
a PHYsical ID, hereinafter referred to as PHY_ID field, indicating identifiers of the optical network unit-side objects, and a data field,
wherein the passive optical network tagging Ethernet frame further includes a length/type field for indicating a frame length or a frame type, and **characterised in that** the PHY_ID field and the mode field are arranged between the length/type field and the data field.

2. The ethernet passive optical network system as set forth in claim 1, wherein the optical line termination further includes:
a multiplexing layer for transmitting the passive optical network tagging ethernet frame received therein to an upper layer over a logic port associated with the corresponding PHY_ID field; and
a bridging function layer for converting information of the PHY_ID field into PHY_ID information corresponding to a destination optical network unit-side object by referring to the destination address field when an emulation mode of a frame received through the logic port is the peer-to-peer transmission mode, and for transmitting the converted PHY_ID information to a corresponding optical network unit over a logic port associated with the converted PHY_ID information.

3. The ethernet passive optical network system as set forth in claim 2, wherein the bridging function layer transmits a frame to the optical network units over the logic port associated with the corresponding PHY_ID field, while maintaining the information of the PHY_ID field if the emulation mode is a single copy broadcasting mode.

4. The ethernet passive optical network system as set forth in claim 1, wherein the optical network units respectively include a filtering layer, the filtering layer is configured to check the mode field when receiving the passive optical network tagging ethernet frame from the optical line termination, to receive the frame when the checked mode is a peer-to-peer mode and information of the PHY_ID field is identical with PHY_ID information assigned to the filtering layer, and to discard the frame when the information of the PHY_ID field is different from the PHY_ID information assigned to the filtering layer.

5. The ethernet passive optical network system as set forth in claim 4, wherein the filtering layer discards the frame when the checked mode is a single copy broadcasting mode and checked PHY_ID information is identical with PHY_ID information assigned to the filtering layer, and receives the frame when the PHY_ID information is different from PHY_ID information assigned to the filtering layer.

6. The ethernet passive optical network system as set forth in claim 1, wherein the mode field comprises 1 bit and the PHY_ID field comprises 15 bits.

7. The ethernet passive optical network system according to claim 1, further comprising:
a passive optical network tagging ethernet Media Access Control, hereinafter referred to as MAC control frame for multi-point control protocol, including a destination address field, a source address field, a length/type field, an operation code field, a mode field indicating an emulation mode, an PHY_ID field indicating identifiers of the optical network units, and a timestamp field.

8. The ethernet passive optical network system as set forth in claim 7,
wherein the optical line termination further includes:
a MAC control layer for performing a multi-point control protocol operation associated with a corresponding optical network unit using the PHY_ID field and the timestamp field when the length/type field of a received passive optical network tagging ethernet MAC control frame indicates a multi-point control protocol type;
a multiplexing layer for transmitting a frame received from the MAC control layer to an upper layer over a logic port associated with corresponding PHY_ID information; and
a bridging function layer for converting information of the PHY_ID field into PHY_ID information corresponding to a destination optical network unit by referring to a destination address field of a frame received through the logic port, and for transmitting the frame to a corresponding optical network unit over a logic port associated with the converted PHY_ID information.

9. The ethernet passive optical network system as set forth in claim 7, wherein the mode field comprises 1 bit and the PHY_ID field comprises 15 bits.

10. The ethernet passive optical network system according to claim 1, further comprising:
an ethernet MAC control frame for pausing an ethernet passive optical network, including a destination address field, a source address field, a length/type field, an operation code field,
a mode field indicating an emulation mode, an PHY_ID field indicating identifiers of the optical network units, and a pause_time field.

11. The ethernet passive optical network system as set forth in claim 10, wherein the optical line termination further includes:
a multiplexing layer for checking an operation code of the passive optical network tagging ethernet MAC control frame received therein, determining whether the checked operation code indicates an ethernet passive optical network pause state, and transmitting the frame to an upper layer over a logic port associated with corresponding PHY_ID information when the checked operation code indicates the ethernet passive optical network pause state; and
a bridging function layer for disabling the logic port receiving the frame during a pause time,
and pausing the ethernet passive optical network.

12. The ethernet passive optical network system as set forth in claim 10, wherein the mode field comprises 1 bit and the PHY_ID field comprises 15 bits.

13. An ethernet passive optical network system operation method adapted to operate the ethernet passive optical network system according to one of claims 1 to 12.

## Patentansprüche

1. Passives, optisches Ethernetnetzwerksystem, das einen optischen Leitungsabschluss und eine Vielzahl optischer Netzwerkeinheiten hat, die mit dem optischen Leitungsabschluss verbunden sind, um eine Peer-Zu-Peer-Übertragung zwischen Objekten auf der Seite der optischen Netzwerkeinheiten bereitzustellen, die von dem optischen Leitungsabschluss gesteuert werden, enthaltend:
einen passiven optischen Netzwerkkennzeichnungs-Ethernetframe, der eine Bestimmungsadresse enthält,
ein Ursprungsadressenfeld, ein Betriebsartenfeld das eine Emulationsbetriebsart kennzeichnet,
eine physikalische ID, die im folgenden als PHY_ID-Feld bezeichnet wird und Kennzeichnungen der Objekte auf der Seite der optischen Netzwerkeinheiten kennzeichnet, und ein Datenfeld,
wobei der passive, optische Netzwerkkennzeichnungs-Ethernetframe weiterhin ein Längen-/Typen-Feld zur Kennzeichnung einer Frame-Länge oder eines Frame-Typs enthält, und **dadurch gekennzeichnet, dass** das PHY_ID-Feld sowie das Betriebsartenfeld zwischen dem Längen-/Typen-Feld und dem Datenfeld angeordnet sind.

2. Passives, optisches Ethernetnetzwerksystem nach Anspruch 1, bei dem der optische Leitungsabschluss weiterhin enthält:
eine Multiplexschicht zum Senden des passiven, optischen Netzwerkkennzeichungs-Ethernetframes, der in dieser empfangen wird, zu einer höheren Schicht über einen logischen Anschluss, der dem entsprechenden PHY_ID-Feld zugeordnet ist; und
eine Überbrückungsfunktions-Schicht zum Umwandeln von Informationen des PHY_ID-Feldes in PHY_ID-Informationen, die einem Bestimmungsobjekt auf der Seite der optischen Netzwerkeinheiten entsprechen, durch Bezugnahme auf das Bestimmungsadressfeld, wenn eine Emulationsbetriebsart eines Frames, der durch den logischen Anschluss empfangen wird, die Peer-Zu-Peer-Sendebetriebsart ist, und zum Senden der umgewandelten PHY_ID-Informationen zu einer entsprechenden optischen Netzwerkeinheit über einen logischen Anschluss, der den umgewandelten PHY_ID-Informationen zugeordnet ist.

3. Passives, optisches Ethernetnetzwerksystem nach Anspruch 2, bei dem die Überbrückungsfunktions-Schicht einen Frame zu den optischen Netzwerkeinheiten über den logischen Anschluss sendet, der dem entsprechenden PHY_ID-Feld zugeordnet ist, während die Informationen des PHY_ID-Feldes beibehalten werden, sofern die Emulationsbetriebsart eine Einzelkopie-Rundsendebetriebsart ist.

4. Passives, optisches Ethernetnetzwerksystem nach Anspruch 1, bei dem die optischen Netzwerkeinheiten eine entsprechende Filterschicht enthalten, wobei die Filterschicht dazu eingerichtet ist, das Betriebsartfeld zu prüfen, wenn der passive, optische Netzwerkkennzeichnungs-Ethernetframe von dem optischen Leitungsabschluss empfangen wird, um den Frame zu empfangen, wenn die geprüfte Betriebsart eine Peer-Zu-Peer-Betriebsart ist und Informationen des PHY_ID-Feldes mit PHY_ID-Informationen identisch sind, die der Filterschicht zugeordnet sind, und den Frame zu verwerfen, wenn sich die Informationen des PHY_ID-Feldes von den PHY_ID-Informationen unterscheiden, die der Filterschicht zugeordnet sind.

5. Passives, optisches Ethernetnetzwerksystem nach Anspruch 4, bei dem die Filterschicht den Frame verwirft, wenn die geprüfte Betriebsart eine Einzelkopie-Rundsendebetriebsart ist und die geprüften PHY_ID-Informationen mit den PHY_ID-Informationen identisch sind, die der Filterschicht zugeordnet sind, und den Frame empfängt, wenn sich die PHY_ID-Informationen von den PHY_ID-Informationen unterscheiden, die der Filterschicht zugeordnet sind.

6. Passives, optisches Ethernetnetzwerksystem nach Anspruch 1, bei dem das Betriebsartfeld 1 Bit enthält und das PHY_ID-Feld 15 Bits enthält.

7. Passives, optisches Ethernetnetzwerksystem nach Anspruch 1, weiterhin umfassend:
eine passive, optische Netzwerkkennzeichnungs-Ethernetmedienzugriffssteuerung, die im folgenden als MAC-Steuerframe für ein Mehrpunkt-Steuerprotokoll bezeichnet wird, und ein Bestimmungsadressfeld, ein Ursprungsadressfeld, ein Längen-/Typen-Feld, ein Betriebscodefeld, ein Betriebsartenfeld, das eine Emulationsbetriebsart kennzeichnet, ein PHY_ID-Feld, das Kennzeichnungen der optischen Netzwerkeinheiten kennzeichnet und ein Zeitstempelfeld enthält.

8. Passives, optisches Ethernetnetzwerksystem nach Anspruch 7, bei dem der optische Leitungsabschluss weiterhin enthält:
eine MAC-Steuerschicht zum Ausführen einer Mehrpunkt-Steuerprotokolloperation, die einer entsprechenden optischen Netzwerkeinheit zugeordnet ist, unter Verwendung des PHY_ID-Feldes und des Zeitstempelfeldes, wenn das Längen-/Typen-Feld eines empfangenen passiven, optischen Netzwerkkennzeichnungs-Ethernet-MAC-Steuerframes einen Mehrpunkt-Steuerprotokolltyp kennzeichnet;
eine Multiplexschicht zum Senden eines Frames, der von der MAC-Steuerschicht empfangen wird, zu einer höheren Schicht über einen Logikanschluss, dem entsprechende PHY_ID-Informationen zugeordnet sind; und
eine Überbrückungsfunktions-Schicht zum Umwandeln von Informationen des PHY_ID-Feldes in PHY_ID-Informationen entsprechend einer optischen Netzwerkbestimmungseinheit durch Bezugnahme auf ein Bestimmungsadressfeld eines Frames, der durch den Logikanschluss empfangen wird, und zum Senden des Frames zu einer entsprechenden optischen Netzwerkeinheit über einen Logikanschluss, der den umgewandelten PHY_ID-Informationen zugeordnet ist.

9. Passives, optisches Ethernetnetzwerksystem nach Anspruch 7, bei dem das Betriebsartenfeld 1 Bit und das PHY_ID-Feld 15 Bits enthält.

10. Passives, optisches Ethernetnetzwerksystem nach Anspruch 1, weiterhin enthaltend:
einen Ethernet-MAC-Steuerframe, der ein passives, optisches Ethernetnetzwerk anhält, enthaltend ein Bestimmungsadressfeld, ein Ursprungsadressfeld, ein Längen-/Typen-Feld, ein Operationscodefeld, ein Betriebsartenfeld, das eine Emulationsbetriebsart kennzeichnet, ein PHY_ID-Feld, das Kennzeichnungen der optischen Netzwerkeinheiten kennzeichnet, und ein pause_time-Feld.

11. Passives, optisches Ethernetnetzwerksystem nach Anspruch 10, bei dem der optische Leitungsabschluss weiterhin enthält:
eine Multiplexschicht zum Überprüfen eines Operationscodes des passiven, optischen Netzwerkkennzeichnungs-Ethernet-MAC-Steuerframes, der darin empfangen wird, zum Bestimmen, ob der überprüfte Operationscode einen Anhaltezustand des passiven, optischen Ethernetnetzwerkes kennzeichnet, und zum Senden des Frames zu einer höheren Schicht über einen Logikanschluss, dem entsprechende PHY_ID-Informationen zugeordnet sind, wenn der überprüfte Operationscode den Anhaltezustand des passiven, optischen Ethernetnetzwerkes kennzeichnet; und eine Überbrückungsfunktions-Schicht zur Außerkraftsetzung des Logikanschlusses, der den Frame empfängt, während einer Anhaltezeit und zum Anhalten des passiven, optischen Ethernetnetzwerkes.

12. Passives, optisches Ethernetnetzwerksystem nach Anspruch 10, bei dem das Betriebsartfeld 1 Bit und das PHY_ID-Feld 15 Bits enthält.

13. Passives, optisches Ethernetnetzwerksystem-Betriebsverfahren, das dazu eingerichtet ist, das passive, optische Ethernetnetzwerksystem nach einem der Ansprüche 1 bis 12 zu betreiben.

## Revendications

1. Système de réseau optique passif Ethernet comportant une terminaison de ligne optique et une pluralité d'unités de réseau optique connectées à la terminaison de ligne optique pour fournir une transmission pair-à-pair entre des objets du côté de l'unité de réseau optique contrôlés par la terminaison de ligne optique, comprenant :
une trame Ethernet d'étiquetage de réseau optique passif comportant une adresse de destination,
un champ d'adresse source, un champ de mode indiquant un mode d'émulation, et
un identifiant physique PHYsical ID, désigné ci-après comme champ PHY_ID, indiquant des identifiants des objets du côté de l'unité de réseau optique, et un champ de données,
dans lequel la trame Ethernet d'étiquetage de réseau optique passif comprend en outre un champ de longueur/type pour indiquer une longueur de trame ou un type de trame, et **caractérisé en ce que** le champ PHY_ID et le champ de mode sont agencés entre le champ de longueur/type et le champ de données.

2. Système de réseau optique passif Ethernet selon la revendication 1, dans lequel la terminaison de ligne optique comprend en outre :
une couche de multiplexage pour transmettre la trame Ethernet d'étiquetage de réseau optique passif qui y est reçue à une couche supérieure via un port logique associé au champ PHY_ID correspondant ; et
une couche de fonction de pontage pour convertir de l'information du champ PHY_ID en information PHY_ID correspondant à un objet côté unité de réseau optique de destination en se référant au champ d'adresse de destination lorsqu'un mode d'émulation d'une trame reçue via le port logique est le mode de transmission pair-à-pair, et pour transmettre l'information PHY_ID convertie à une unité de réseau optique correspondante via un port logique associé à l'information PHY_ID convertie.

3. Système de réseau optique passif Ethernet selon la revendication 2, dans lequel la couche de fonction de pontage transmet une trame aux unités de réseau optique via le port logique associé au champ PHY_ID correspondant, tout en maintenant l'information du champ PHY_ID si le mode d'émulation est un mode de diffusion à copie unique.

4. Système de réseau optique passif Ethernet selon la revendication 1, dans lequel les unités de réseau optique comprennent respectivement une couche de filtration, la couche de filtration étant configurée pour vérifier le champ de mode lors de la réception de la trame Ethernet d'étiquetage de réseau optique passif à partir de la terminaison de ligne optique, pour recevoir la trame lorsque le mode vérifié est un mode pair-à-pair et de l'information du champ PHY_ID est identique à de l'information PHY_ID assignée à la couche de filtration, et pour éliminer la trame lorsque l'information du champ PHY_ID est différente de l'information PHY_ID assignée à la couche de filtration.

5. Système de réseau optique passif Ethernet selon la revendication 4, dans lequel la couche de filtration élimine la trame lorsque le mode vérifié est un mode de diffusion à copie unique et l'information PHY_ID vérifiée est identique à l'information PHY_ID assignée à la couche de filtration, et reçoit la trame lorsque l'information PHY_ID est différente de l'information PHY_ID assignée à la couche de filtration.

6. Système de réseau optique passif Ethernet selon la revendication 1, dans lequel le champ de mode comprend 1 bit et le champ PHY_ID comprend 15 bits.

7. Système de réseau optique passif Ethernet selon la revendication 1, comprenant en outre :
un contrôle d'accès au support, soit Media Access Control ou MAC, Ethernet d'étiquetage du réseau optique passif, désigné ci-après comme trame de contrôle MAC, pour un protocole de contrôle multipoint, comprenant un champ d'adresse de destination, un champ d'adresse source, un champ de longueur/type, un champ de code d'opération, un champ de mode indiquant un mode d'émulation, un champ PHY_ID indiquant des identifiants des unités de réseau optique, et un champ d'horodatage.

8. Système de réseau optique passif Ethernet selon la revendication 7, dans lequel la terminaison de ligne optique comprend en outre :
une couche de contrôle MAC pour mettre en oeuvre une opération de protocole de contrôle multipoint associée à une unité de réseau optique correspondante en utilisant le champ PHY_ID et le champ d'horodatage lorsque le champ de longueur/type d'une trame de contrôle MAC Ethernet d'étiquetage du réseau optique passif reçue indique un type de protocole de contrôle multipoint ;
une couche de multiplexage pour transmettre une trame reçue à partir de la couche de contrôle MAC à une couche supérieure via un port logique associé à de l'information PHY_ID correspondante ; et
une couche de fonction de pontage pour convertir de l'information du champ PHY_ID en information PHY_ID correspondant à une unité de réseau optique de destination en se référant à un champ d'adresse de destination d'une trame reçue via le port logique, et pour transmettre la trame à une unité de réseau optique correspondante via un port logique associé à l'information PHY_ID convertie.

9. Système de réseau optique passif Ethernet selon la revendication 7, dans lequel le champ de mode comprend 1 bit et le champ PHY_ID comprend 15 bits.

10. Système de réseau optique passif Ethernet selon la revendication 1, comprenant en outre :
une trame de contrôle MAC Ethernet pour mettre en pause un réseau optique passif Ethernet, comprenant un champ d'adresse de destination,
un champ d'adresse source, un champ de longueur/type, un champ de code d'opération, un champ de mode indiquant un mode d'émulation, un champ PHY_ID indiquant des identifiants des unités de réseau optique, et un champ de temps de pause pause_time.

11. Système de réseau optique passif Ethernet selon la revendication 10, dans lequel la terminaison de ligne optique comprend en outre :
une couche de multiplexage pour vérifier un code d'opération de la trame de contrôle MAC Ethernet d'étiquetage de réseau optique passif qui y est reçue, pour déterminer si le code d'opération vérifié indique un état de pause du réseau optique passif Ethernet, et pour transmettre
la trame à une couche supérieure via un port logique associé à de l'information PHY_ID correspondante si le code d'opération vérifié indique l'état de pause du réseau optique passif Ethernet ;
et une couche de fonction de pontage pour mettre hors service le port logique recevant la trame durant un temps de pause, et pour mettre en pause le réseau optique passif Ethernet.

12. Système de réseau optique passif Ethernet selon la revendication 10, dans lequel le champ de mode comprend 1 bit et le champ PHY_ID comprend 15 bits.

13. Procédé d'opération d'un système de réseau optique passif Ethernet adapté pour mettre en oeuvre le système de réseau optique passif Ethernet selon l'une des revendications 1 à 12.
